# EUROPÄISCHE PATENTSCHRIFT

(11) **EP 1 357 654 B1**
(45) Veröffentlichungstag und Bekanntmachung des Hinweises auf die Patenterteilung: **07.03.2007**
(21) Anmeldenummer: 03100863.4
(22) Anmeldetag: 02.04.2003
(51) Int. Cl.: H02G 11/00

(54) **Einrichtung zum Führen von Leitungen zwischen zwei zueinander beweglichen Teilen**
Device for guiding conduits between two relatively movable parts
Dispositif de guidage de conduites entre deux parties mobiles l'une par rapport à l'autre

(30) Priorität: 23.04.2002 DE 10218121
(43) Veröffentlichungstag der Anmeldung: 29.10.2003
(73) Patentinhaber: SIEMENS AKTIENGESELLSCHAFT, 80333 München (DE)
(72) Erfinder: Mehdianpour, Mohammad, 81829, München (DE); Melf, Johann, 82541, Münsing (DE)

(56) Entgegenhaltungen:
- EP-A- 0 724 101
- DE-A- 3 107 045
- DE-A- 3 139 737
- DE-C- 3 507 201
- DE-U- 8 530 214
- GB-A- 1 529 580

## Beschreibung

Die Erfindung bezieht sich auf eine Einrichtung zum Führen von Leitungen zwischen zwei relativ zueinander linear beweglichen Teilen, insbesondere in einer Bestückeinrichtung für elektrische Leiterplatten.

Bei derartigen Bestückautomaten ist es üblich, die zwischen einem Chassis und einem darauf linear verfahrbaren Schlitten verlaufenden Leitungen in einem Kabelkanal zu führen, der aus einem im Querschnitt C-förmig gebogenen Blechkanal besteht. Da die zu führenden Leitungen beidseitig mit z.B. als Stecker ausgebildeten Kabelabschlüssen versehen sind, ist es bei der Montage nicht möglich, die Kabel in der Längsrichtung durch einen geschlossenen Kanal hindurchzuschieben. Sie müssen daher transversal in den längsseitig offenen Kanal eingelegt werden. Um eine hohe Biegsamkeit des Kanals zu ermöglichen, ist dieser mit einer Vielzahl von Querschlitzen versehen, die von der Krümmungsaußenseite her eingeschnitten sind. Die offene Seite liegt ebenfalls auf der Außenseite der Krümmung. Dabei ist durch Schleudereffekte beim schnellen Verfahren des Schlittens eine sichere Führung der Leitungen nicht gewährleistet ist. Ferner kann es dabei zu einem Verhaken der Kabelführung an Störkanten kommen.

Z.B. nach der DE 3107045 C ist es bekannt, für die Führung von Leitungen Gliederketten zu verwenden. Die bügelförmigen Kettenglieder sind einzeln an einem inneren Tragband befestigt. Zwischenglieder verschließen die Lücken zwischen den Gliedern im gebogenen Abschnitt. Derartige Gliederketten sind aufwendig herzustellen. Die geschlossene Hohlform verhindert das transversale Einlegen der Leitungen.

Durch die EP0544027 A ist ein flexibler einstückiger Kabelkanal bekannt geworden, bei dem die schlitzartige Längsöffnung zum Einlegen der Kabel an der Außenseite angeordnet ist. Die Haltekraft zum Abfangen der Fliehkräfte ist begrenzt.

Aus der DE-3139737-A1 ist ein Kanal zum Führen von Kabeln bekannt, der eine auf der Innenseite der Krümmung liegende offene Seite aufweist. Der Kanal ist aus Kurzen, ineinander verhakten und zueinander beweglichen Segmenten zusammengesetzt.

Der Erfindung liegt die Erfindung zugrunde, eine sichere und verschleißarme Führung der Leitungen zu ermöglichen.

Diese Aufgabe wird durch die Erfindung gemäß Anspruch 1 gelöst. Die Kabel können nun ebenso wie bisher durch die offene Längsseite des Kanals in diesen eingelegt werden. Durch das Verlegen der offenen Seite des C-Profiles auf die Innenseite der Krümmung liegt nun die geschlossene Basisseite des Kanals auf der Außenseite der Krümmung. Die einzelnen Leitungen können z.B. zu Kabeln so zusammengefasst werden, dass sie auch aufgrund ihrer Eigensteifigkeit nicht durch den inneren Längsschlitz herausfallen können. Da nun die Außenseite des Kanals keine Längsöffnung mehr aufweist, besteht keine Gefahr mehr, dass die Leitungen z.B. durch Schleudereffekte aus dem Kanal heraustreten und somit sicher gehalten werden.

Nach einer Weiterbildung der Erfindung ist in den Kanal zumindest ein die offene Seite verschließender Abdeckstreifen einsetzbar ist. Dadurch wird nun der Kanal vollständig geschlossen, so dass eine gute Führung der Leitungen gewährleistet ist. Durch das Verlegen der offenen Seite des C-Profiles auf die Innenseite der Krümmung liegt auch der Abdeckstreifen im Bereich der neutralen Biegefaser, wodurch die Relativbewegungen zwischen dem Abdeckstreifen und dem Kanal gering gehalten werden. Die Kabel können nun ebenso wie bisher durch die offene Längsseite des Kanals in diesen eingelegt werden und danach kann der Abdeckstreifen von der Stirnseite des Kanals her in diesen eingeschoben werden. Der im Querschnitt z.B. rechteckige Kanal ist auf der Krümmungsinnenseite mit nach innen weisenden Schenkeln versehen, an denen der Abdeckstreifen zur sicheren Anlage kommt.

Nach einer anderen Weiterbildung der Erfindung münden die inneren Enden der Querschlitze in erweiterten Bohrungen in den Seitenwänden des Kanals, wodurch die Gefahr von Spannungsrissen verringert und das einfache Durchscheren der Wände erleichtert wird.

Im folgenden wird die Erfindung anhand eines in der Zeichnung dargestellten Ausführungsbeispieles näher erläutert.
- Figur 1: zeigt eine schematisierte Seitenansicht eines Teiles eines Bestückautomaten mit einem Kanal in einem Teilschnitt entlang der Linie I - I in Figur 2 ,
- Figur 2: einen Schnitt durch den Kanal entlang der Linie II-II in Figur 1.

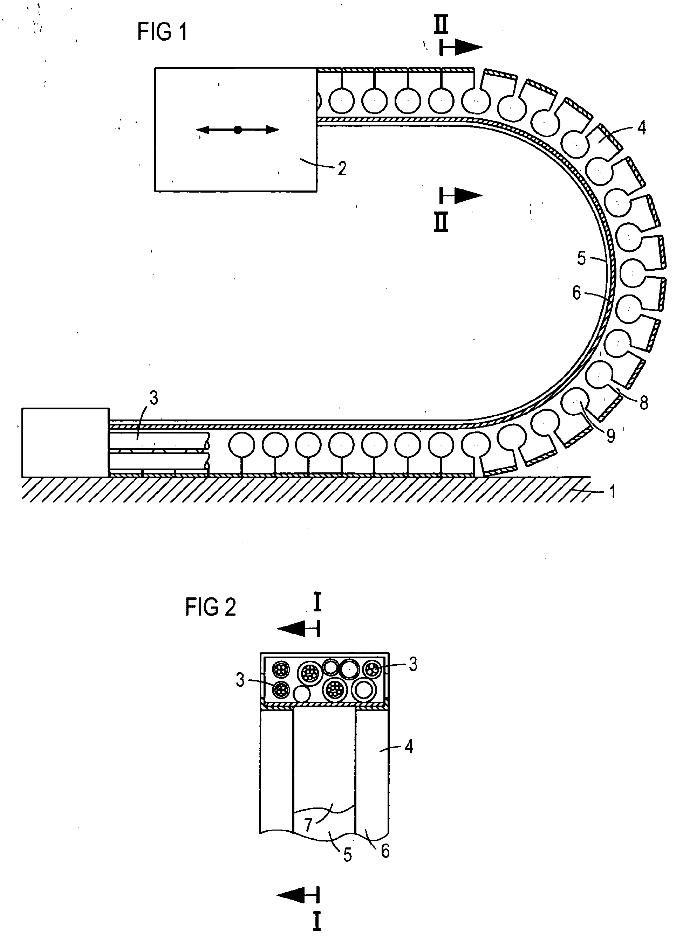

Nach den Figuren 1 und 2 sind zwischen einem stationären Chassis 1 des Bestückautomaten und einem gegenüber diesem linear verfahrbaren Schlitten 2 Leitungen 3 verlegt, die z.B. der Stromversorgung, der Signalübertragung und Druckluftzufuhr dienen. Die Leitungen sind in einem biegsamen Kanal 4 geführt, der ein im wesentlichen C-förmiges Querschnittsprofil aufweist, das aus Metallblech gebogen ist. Auf seiner Krümmungsinnenseite weist der Kanal 4 einen offenen Längsschlitz 5 auf, der zwischen zwei lappenartig zueinander gerichteten Schenkeln 6 gebildet ist.

Entlang der Innenseite dieser Schenkel 6 ist ein Abdeckstreifen 7 eingelegt, der den offenen Längsschlitz verschließt, wodurch die einliegenden Leitungen 3 vollständig im Kanal 4 eingeschlossen und sicher geführt sind. Um einen engen Biegeradius des Kanals 4 zu ermöglichen, ist dieser mit von der Krümmungsaußenseite her durch Scheren eingeschnittenen Querschlitzen 8 versehen, die in erweiterten Bohrungen 9 münden. Die im Scherschnitt erzeugten Querschlitze 5 haben den Vorteil, dass sich die Schlitzränder im gestreckten Zustand unmittelbar zusammenstoßen, so dass der Kanal 4 sich nur in einer Richtung biegen kann. Daher kann er sich auf der beweglichen Seite nicht nach unten durchbiegen und benötigt keine störende Auflage.

Bezugszeichen
- 1: Chassis
- 2: Schlitten
- 3: Leitung
- 4: Kabelkanal
- 5: Längsschlitz
- 6: Schenkel
- 7: Abdeckstreifen
- 8: Querschlitz
- 9: Bohrung

## Patentansprüche

1. Einrichtung zum Führen von Leitungen (3) zwischen zwei relativ zueinander zumindest annähernd linear beweglichen Teilen insbesondere in einer Bestückeinrichtung für elektrische Leiterplatten, wobei die Einrichtung einen quer zu seiner Längsrichtung biegsamen einstückigen Kanal (4) aufweist, der mit ein C-artiges Profil bildenden Wänden versehen ist und der eine partiell offene Seite aufweist,
wobei der Kanal (4) eine Vielzahl von in der Längsrichtung aneinandergereihten Querschlitzen (8) aufweist, die von der Außenseite der zu bildenden Krümmung her eingeschnitten sind,
**dadurch gekennzeichnet, dass** die offene Seite auf der Innenseite der zu bildenden Krümmung liegt und dass die Querschlitze (8) von der der offenen Seite gegenüberliegenden Basis des Kanals (4) her in die Wände eingeschnitten sind.

2. Einrichtung nach Anspruch 1,
**dadurch gekennzeichnet, dass** in den Kanal (4) zumindest ein die offene Seite verschließender Abdeckstreifen (7) einsetzbar ist.

3. Einrichtung nach Anspruch 1 oder 2,
**dadurch gekennzeichnet, dass** die inneren Enden der Querschlitze (8) in erweiterten Bohrungen (9) münden.

## Claims

1. A device for guiding conduits (3) between two parts which can be moved at least approximately linearly in respect of each another, in particular in a pick and place device for electrical circuit boards, with the device comprising a one-piece channel (4) which is flexible cross-sectionally in respect of its longitudinal direction, said one-piece channel (4) being provided with walls forming a C-shaped profile and comprising a partially open side,
with the channel (4) comprising a plurality of cross-sectional slits (8) arranged in rows in the longitudinal direction, said cross-sectional slits (8) being cut from the exterior of the curvature to be formed,
**characterised in that**
the open side rests on the interior of the curvature to be formed, and that the cross-sectional slits (8) are cut from the base of the channel (4) facing the open side into the walls.

2. The device according to claim 1,
**characterised in that**
at least one cover strip (7) sealing the open side can be used in the channel (4).

3. The device according to claim 1 or 2,
**characterised in that**
the inner ends of the cross-sectional slits (8) open out into extended boreholes (9).

## Revendications

1. Dispositif de guidage de conducteurs ou conduits (3) entre deux éléments qui peuvent se déplacer au moins approximativement en ligne droite l'une par rapport à l'autre, en particulier dans un dispositif de montage de cartes de circuits électriques, le dispositif présentant un canal (4) d'une seule pièce, flexible transversalement par rapport au sens de sa longueur et doté de parois qui forment un profil en forme de C avec un côté partiellement ouvert,
le canal (4) présentant une pluralité de fentes transversales (8) disposées en série les unes à côté des autres dans le sens de la longueur et découpées depuis le côté extérieur de la courbe à réaliser,
**caractérisé en ce que** le côté ouvert est situé sur le côté intérieur de la courbure à réaliser et **en ce que** les fentes transversales (8) sont découpées dans les parois depuis la base du canal (4) qui fait face au côté ouvert.

2. Dispositif selon la revendication 1, **caractérisé en ce qu'**au moins une bande de recouvrement (7) qui referme le côté ouvert peut être insérée dans le canal (4).

3. Dispositif selon les revendications 1 ou 2, **caractérisé en ce que** les extrémités intérieures des fentes transversales (8) débouchent dans des alésages (9) évasés.
